# EUROPÄISCHE PATENTSCHRIFT

(11) **EP 1 714 921 B1**
(45) Veröffentlichungstag und Bekanntmachung des Hinweises auf die Patenterteilung: **23.01.2008**
(21) Anmeldenummer: 05026546.1
(22) Anmeldetag: 06.12.2005
(51) Int. Cl.: B65G 17/46, B65G 17/32, B65B 59/00

(54) **Kettenförderer mit einrastbaren und entfernbaren Mitnehmern**
Chain conveyor with removable snap-on pushers
Transporteur à chaîne avec des taquets d'entraînement encliquetables et séparables

(30) Priorität: 20.04.2005 DE 102005018394
(43) Veröffentlichungstag der Anmeldung: 25.10.2006
(73) Patentinhaber: UHLMANN PAC-SYSTEME GmbH & Co. KG, 88471 Laupheim (DE)
(72) Erfinder: Fochler, Fritz, 89171 Illerkirchberg (DE)
(74) Vertreter: Hentrich, Swen

(56) Entgegenhaltungen:
- DE-A1- 19 915 271
- FR-A- 2 663 011
- US-A- 1 463 011
- US-A- 2 281 938
- US-A- 2 390 075
- US-A- 2 439 040

## Beschreibung

Die Erfindung betrifft eine Fördereinrichtung für Waren, insbesondere für Faltschachteln oder dergleichen, mit einer aus einzelnen Kettengliedern zusammengesetzten, endlos umlaufenden Transportkette und auf der Transportkette angeordneten Mitnehmern.

Bei bisher in derartigen Fördereinrichtungen eingesetzten aus einzelnen Kettengliedern zusammengesetzten Transportketten, die endlos umlaufen und durch die Transportkette einen Bereich aussen von einem Bereich innen trennen, muss eine spezielle Anpassung der Teilung erfolgen, also die Mitnehmer speziell an die Abmessungen der zu transportierenden Faltschachteln angepaßt positioniert werden, wozu an die Transportkette Mitnehmerlaschen angenietet werden. Dies kann nur manuell erfolgen und verteuert dementsprechend die Herstellung der Transportkette. Weiterhin ist bei bekannten Transportketten nachteilig, dass die Abstützung der Mitnehmer unzureichend ist, so dass der Mitnehmer in seinem obersten Punkt Bewegungen ausführt.

Aus der DE 199 15 271 A1 ist eine Fördereinrichtung bekannt, die zwei Förderketten aufweist, denen jeweils Mitnehmer zugeordnet sind, wobei diese Mitnehmer einen gegenseitigen Abstand aufweisen. Zur Veränderung dieses Abstandes bei einem Formatwechsel kann der gemeinsame Antrieb der Förderketten unterbrochen und die eine gegenüber der anderen verstellt werden.

Eine Fördereinrichtung mit zwei getrennten Förderketten ist auch aus der US 2 439 040 bekann.

Die FR 2 663 011 zeigt eine Förderkette mit ausgewählten einzelnen, Kettengliedern, auf deren Verbindungsachse Mitnehmerlaschen fast aufgesteckt sind, so dass auf diesen wenigen Kettengliedern Ausleger befestigt werden können, die nur mit den Mitnehmerlaschen zusammenwirken.

Der Erfindung liegt daher die Aufgabe zugrunde, eine Fördereinrichtung der eingangs genannten Art so auszubilden, dass diese variabel einsetzbar ist.

Diese Aufgabe wird nach der Erfindung bei einer Fördereinrichtung der eingangs genannten Art dadurch gelöst, dass jedem Kettenglied eine nach außen weisende Mitnehmerlasche zugeordnet ist mit einem Rastsitz zur Verbindung mit dem Mitnehmer, der einen Ausleger aufweist zur Auflage auf einer der benachbarten Mitnehmerlaschen.

Mit dieser Gestaltung ist der Vorteil einer maschinellen Fertigung der Transportkette verbunden, da jedem Kettenglied eine Mitnehmerlasche, die untereinander gleichartig gestaltet sind, zugeordnet ist und damit wahlweise auf die entsprechende Mitnehmerlasche ein Mitnehmer mittels des Rastsitzes positioniert werden kann. Damit liegt eine teilungsneutrale Transportkette vor, bei der erst mit dem Aufstecken der Mitnehmer auf die Mitnehmerlasche die Teilung festgelegt wird. Da der Mitnehmer einen Ausleger aufweist, ist seine Basis zur Abstützung verbreitert, so dass der Mitnehmer geringeren Schwankungen unterliegt.

Im Rahmen der Erfindung ist weiterhin vorgesehen, dass die Mitnehmerlasche auf ihrer Außenumfangsfläche für den Rastsitz mindestens eine Mulde aufweist zum Zusammenwirken mit mindestens einem dem Mitnehmer zugeordneten Raststeg. Diese Gestaltung zeichnet sich dadurch aus, dass das Zusammenwirken des Mitnehmers mit der Mitnehmerlasche in sehr einfacher Weise durch eine Steckverbindung erfolgen kann, wobei der Zusammenhalt zwischen dem Mitnehmer und der Mitnehmerlasche über den Rastsitz auch dann gewährleistet ist, wenn die umlaufende Transportkette auf ihrem unteren Trum die Mitnehmer nach unten weisend orientiert. Dabei besteht die Möglichkeit, dass die Mulde zu einer in Umfangrichtung verlaufenden Kehlung erweitert und der Raststeg mehrfach vorgesehen ist, um so die Belastbarkeit der Verbindung zwischen dem Mitnehmer und der Mitnehmerlasche zu erhöhen.

Hinsichtlich einer Stabilisierung der Verbindung zwischen dem Mitnehmer und der Mitnehmerlasche ist weiterhin vorgesehen, dass die Seitenwangen der Mitnehmerlasche als Führungsflächen für eine im Mitnehmer ausgebildete Aufnahme gestaltet sind.

Einer weiteren Verbreiterung der Basis für die Abstützung des Mitnehmers dient, dass der Ausleger zweifach vorgesehen ist mit in Förderrichtung nach vorne und nach hinten weisender Orientierung. Dem gleichen Zweck dient auch, dass der Ausleger auf mehreren der benachbarten Mitnehmerlaschen abgestützt ist. Dabei kann die Gestaltung so getroffen sein, dass die Strecke zwischen zwei Mitnehmern durch mindestens einen Ausleger abgedeckt ist, so dass im Ergebnis die Breite des Mitnehmers an seiner Basis durch die Ausleger auf die gewünschte Maschinenteilung abgestimmt ist.

Im folgenden wird die Erfindung an einem in der Zeichnung dargestellten Ausführungsbeispiel näher erläutert; es zeigt:

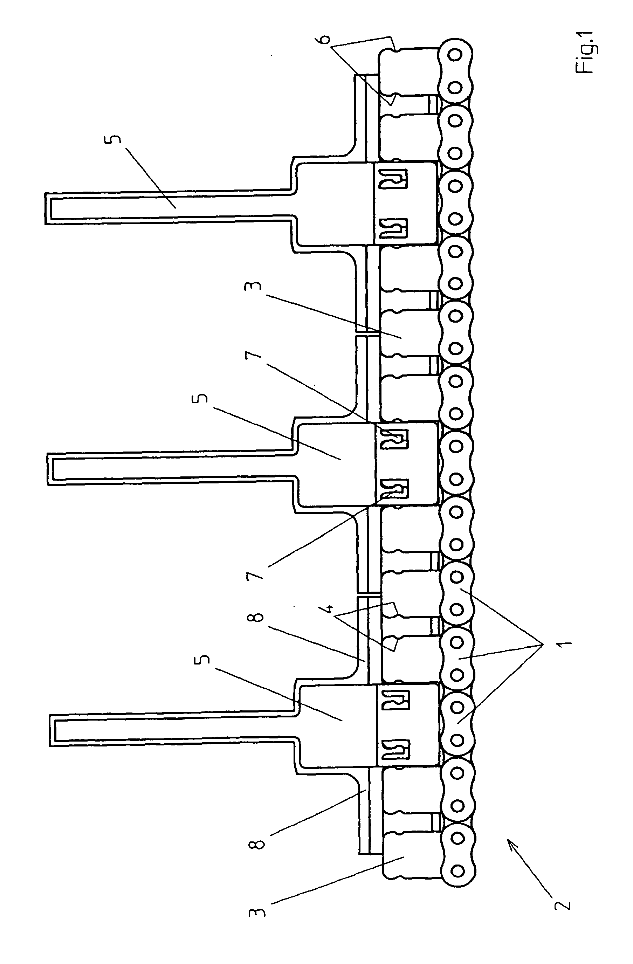

- Fig. 1: von einer Fördereinrichtung das obere Trum einer Transportkette mit auf den Mitnehmerlaschen aufgesteckte Mitnehmern.

In der Zeichnung sind von einer Fördereinrichtung für Waren nur die zur Erläuterung der Erfindung wesentlichen Bestandteile gezeigt, nämlich eine aus einzelnen Kettengliedern 1 zusammengesetzte, endlos umlaufende Transportkette 2, wobei jedem Kettenglied 1 eine nach außen weisende Mitnehmerlasche 3 zugeordnet ist. Jede Mitnehmerlasche 3 weist einen Rastsitz 4 auf, um die Mitnehmerlasche 3 mit einem Mitnehmer 5 verbinden zu können, wobei für den Rastsitz 4 auf der Außenumfangsfläche der Mitnehmerlasche 3 auf zwei gegenüberliegenden Seiten zwei Mulden 6 ausgebildet sind zum Zusammenwirken mit zwei dem Mitnehmer 5 zugeordneten Raststegen 7.

Weiterhin weist der Mitnehmer 5 einen Ausleger 8 auf zur Auflage auf benachbarte Mitnehmerlaschen 3, die der den Mitnehmer 5 tragenden Mitnehmerlasche 3 in Förderrichtung voranlaufen oder auch nachfolgen können.

Der Mitnehmer 5 weist eine Aufnahme auf, mit der dieser auf die Mitnehmerlasche 3 aufgesteckt wird, wobei die Seitenwangen der Mitnehmerlasche 3 als Führungsfläche für die Aufnahme gestaltet sind.

Figur 1 zeigt, dass der Ausleger 8 an jedem Mitnehmer 5 zweifach vorgesehen ist mit in Förderrichtung nach vorne und nach hinten weisender Orientierung, wobei in der gezeigten Ausführungsform die Ausleger 8 auf mehreren der benachbarten Mitnehmerlaschen 3 abgestützt sind, um so die Strecke zwischen zwei Mitnehmern 5 abzudecken.

Zwischen den Mitnehmern 5 können die Waren spielfrei transportiert werden.

Eine derartige mit Mitnehmerlaschen 3 und Mitnehmer 5 gestaltete Transportkette 2 bietet weiterhin den Vorteil, dass die Herstellkosten für Fördereinrichtungen reduziert werden, da identische Baugruppen für verschiedene Teilungen verwendet werden können und eine schnelle Anpassung an veränderte Kundenanforderungen möglich ist.

## Patentansprüche

1. Fördereinrichtung für Waren, insbesondere für Faltschachteln oder dergl., mit einer aus einzelnen Kettengliedern (1) zusammengesetzten, endlos umlaufenden Transportkette (2) und auf der Transportkette (2) angeordneten Mitnehmern (5), **dadurch gekennzeichnet, daß** jedem Kettenglied (1) eine nach außen weisende Mitnehmerlasche (3) zugeordnet ist mit einem Rastsitz (4) zur Verbindung mit dem Mitnehmer (5), der einen Ausleger (8) aufweist zur Auflage auf eine der benachbarten Mitnehmerlaschen (3).

2. Fördereinrichtung nach Anspruch 1, **dadurch gekennzeichnet, daß** die Mitnehmerlasche (3) auf ihrer Außenumfangsfläche für den Rastsitz (4) mindestens eine Mulde (6) aufweist zum Zusammenwirken mit mindestens einem dem Mitnehmer (5) zugeordneten Raststeg (7).

3. Fördereinrichtung nach Anspruch 2, **dadurch gekennzeichnet, daß** die Mulde (6) zu einer in Umfangsrichtung verlaufenden Kehlung erweitert und der Raststeg (7) mehrfach vorgesehen ist.

4. Fördereinrichtung nach einem der Ansprüche 1 bis 3, **dadurch gekennzeichnet, daß** die Seitenwangen der Mitnehmerlasche (3) als Führungsflächen für eine im Mitnehmer (5) ausgebildete Aufnahme gestaltet sind.

5. Fördereinrichtung nach einem der Ansprüche 1 bis 4, **dadurch gekennzeichnet, daß** der Ausleger (8) zweifach vorgesehen ist mit in Förderrichtung nach vorne und nach hinten weisender Orientierung.

6. Fördereinrichtung nach einem der Ansprüche 1 bis 5, **dadurch gekennzeichnet, daß** der Ausleger (8) auf mehreren der benachbarten Mitnehmerlaschen (3) abgestützt ist.

7. Fördereinrichtung nach einem der Ansprüche 1 bis 6, **dadurch gekennzeichnet, daß** die Strecke zwischen zwei Mitnehmern (5) durch mindestens einen Ausleger (8) abgedeckt ist.

## Claims

1. A conveyor apparatus for goods, in particular for folding boxes or the like, comprising a transport chain (2) which is composed of individual chain links (1) and which circulates endlessly, and entrainment members (5) arranged on the transport chain (2), **characterised in that** associated with each chain link (1) is an outwardly facing entrainment bar (3) having a latching seat (4) for connection to the entrainment member (5), which has a projecting arm (8) for bearing on one of the adjacent entrainment bars (3).

2. A conveyor apparatus according to claim 1 **characterised in that** the entrainment bar (3) has at least one recess (6) on its outside peripheral surface for the latching seat (4), for co-operating with at least one latching leg (7) associated with the entrainment member (5).

3. A conveyor apparatus according to claim 2 **characterised in that** the recess (6) is enlarged to afford a channel extending in the peripheral direction and there are provided a plurality of latching legs (7).

4. A conveyor apparatus according to one of claims 1 to 3 **characterised in that** the side walls of the entrainment bar (3) are in the form of guide surfaces for a receiving means provided in the entrainment member (5).

5. A conveyor apparatus according to one of claims 1 to 4 **characterised in that** the projecting arm (8) is provided in duplicate with an orientation facing forwardly and rearwardly in the conveyor direction.

6. A conveyor apparatus according to one of claims 1 to 5 **characterised in that** the projecting arm (8) is supported on a plurality of the adjacent entrainment bars (3).

7. A conveyor apparatus according to one of claims 1 to 6 **characterised in that** the distance between two entrainment members (5) is covered by at least one projecting arm (8).

## Revendications

1. Dispositif de transport de marchandises, notamment des boîtes pliantes ou similaires, comportant une chaîne de transport (2) circulant sans fin et composée d'éléments de chaîne (1) individuels, avec des entraîneurs (5) montés sur cette chaîne, **caractérisé en ce qu'**à chaque élément de chaîne (1) est associée une patte d'entraîneur (3) dirigée vers l'extérieur et présentant un siège d'arrêt (4) pour assurer la liaison avec l'entraîneur (5) qui possède un bras (8) venant se monter sur une des pattes d'entraîneur (3) voisines.

2. Dispositif de transport selon la revendication 1. **caractérisé en ce que** sur sa surface périphérique externe, la patte d'entraîneur (3) présente, pour réaliser le siège d'arrèt (4) au moins un creux (6) destiné à coopérer avec au moins une barrette d'arrêt (7) associée à l'entraîneur.

3. Dispositif de transport selon la revendication 2, **caractérisé en ce que** le creux (6) s'évase en direction périphérique pour donner une moulure et il y a plusieurs barrettes d'arrêt (7).

4. Dispositif de transport selon une des revendications 1 à 3, **caractérisé en ce que** les joues latérales de la patte d'entraîneur (3) sont configurées de manière à constituer des surfaces de guidage pour un logement réalisé dans l'entraîneur.

5. Dispositif de transport selon u ne des revendications 1 à 4, **caractérisé en ce que** le bras (8) est double en étant orienté par rapport au sens du transport, vers l'avant et vers l'arrière.

6. Dispositif de transport selon une des revendications 1 à 5, **caractérisé en ce que** le bras (8) est en appui sur plusieurs des pattes d'entraîneur (3) voisines.

7. Dispositif de transport selon une des revendications 1 à 6, **caractérisé en ce que** l'intervalle entre deux entraîneurs (5) est couvert par au moins un bras (8).
